# EUROPEAN PATENT APPLICATION

(11) **EP 4 671 814 A1**
(43) Date of publication of application: **31.12.2025**
(21) Application number: 25186001.1
(22) Date of filing: 27.06.2025
(51) Int. Cl.: G01S 7/48, G01S 7/487, G01S 17/89, G01S 17/10, G01S 17/931, G01S 7/489

(54) **A DENOISING METHOD FOR A LIDAR AND THE LIDAR**

(30) Priority: 28.06.2024 CN 202410866323
(71) Applicant: Suteng Innovation Technology Co., Ltd, Shenzhen City Guangdong 518000 (CN)
(72) Inventor: GONG, Changsheng, Shenzhen City (CN)
(74) Representative: Ran, Handong

(57) **Abstract**

The present application embodiment discloses a denoising method for a LIDAR and a LIDAR. The method first obtaining the echo signal corresponding to a pixel unit in a receiving array of the LIDAR; obtaining a target measurement distance and echo feature information based on the echo signal, wherein the echo feature information is an echo amplitude and/or an echo width; obtaining a target noise point threshold based on a pixel position of the pixel unit and the target measurement distance; determining whether the echo signal is a noise signal according to the echo feature information and the target noise point threshold; if so, deleting the echo signal. Different pixel positions or different target measurement distances correspond to different target noise thresholds. The target noise threshold changes with the change of the pixel position or the target measurement distance to effectively remove the noise signals in multiple echo signals received at the pixel position and improve the accuracy of the LIDAR.

## Description

### TECHNICAL FIELD

The present application relates to the field of LIDAR technology, and more specifically, to a denoising method for a LIDAR and the LIDAR.

### BACKGROUND

At present, in the field of autonomous driving, the LIDAR is one of the most widely used environment perception sensors. When the LIDAR operates, it receives not only echo signals from the detection area, but also a lot of noise echo signals. A denoising strategy is needed to remove the noise echo signals and improve the ranging accuracy of the LIDAR. However, the current denoising methods use a single threshold to remove the noise signals, which cannot accurately perform the denoising, resulting in poor denoising effect.

### SUMMARY

The present application provides a denoising method for a LIDAR and the LIDAR, which can accurately remove noise signals from echo signals corresponding to pixel units.

A first aspect of the present application provides a denoising method for a LIDAR, which comprises the following steps: an echo signal corresponding to a pixel unit in a receiving array of the LIDAR is acquired; target measurement distance and echo feature information are obtained based on the echo signal, wherein the echo feature information is echo amplitude and/or echo width; a target noise point threshold is obtained based on a pixel position of the pixel unit and the target measurement distance; it is determined whether the echo signal is a noise signal according to the echo feature information and the target noise point threshold; and if so, the echo signal is deleted.

A second aspect of the present application provides a LIDAR, which comprises: at least one processor; a memory in communication with the at least one processor; wherein the memory stores instructions executable by the at least one processor, and the instructions are executed by the at least one processor to enable the at least one processor to perform the denoising method of the LIDAR.

The denoising method for the LIDAR provided by the embodiments of the present application is different from the prior art. The method first acquires an echo signal corresponding to a pixel unit in a receiving array of the LIDAR, obtains target measurement distance and echo feature information based on the echo signal, wherein the target measurement distance represents the distance corresponding to the echo signal, and the echo feature information is echo amplitude or echo width, then obtains a target noise point threshold based on a pixel position of the pixel unit and the target measurement distance, and finally determines whether the echo signal is a noise signal according to the echo feature information and the target noise point threshold, and deletes the echo signal if it is a noise signal. Since different regions of the receiving array correspond to different noise types, and the energy of the echo signals received by different regions also differs, the denoising method obtains the target noise point threshold based on the pixel position of the pixel unit and the target measurement distance corresponding to the echo signal, different pixel positions or different target measurement distances correspond to different target noise point thresholds, and the target noise point threshold changes with the change of the pixel position or the target measurement distance, so that the noise signals in the plurality of echo signals received by the pixel position can be effectively removed, and the accuracy of the LIDAR is improved.

### BRIEF DESCRIPTION OF DRAWINGS

The one or more embodiments are illustrated by way of example in the drawings that are shown in the accompanying drawings, and any reference numerals in the drawings denote like elements, and the drawings are not limited to a scale unless otherwise specified.
FIG. 1 is a schematic structural diagram of a denoising method for a LIDAR according to an embodiment of the present application;
FIG. 2 is a schematic structural diagram of a LIDAR according to an embodiment of the present application;
FIG. 3 is a schematic diagram of a transmitting array according to an embodiment of the present application;
FIG. 4 is a schematic diagram of a receiving array according to an embodiment of the present application;
FIG. 5 is a schematic diagram of a denoising method for a LIDAR according to an embodiment of the present application;
FIG. 6 is a schematic diagram of step S13 in FIG. 5;
FIG. 7 is a schematic diagram of a first noise identification curve corresponding to a pixel unit in region A according to an embodiment of the present application;
FIG. 8 is a schematic diagram of a first noise identification curve corresponding to a pixel unit in region B according to an embodiment of the present application;
FIG. 9 is a schematic diagram of step S13 in Fig. 5 ;
FIG. 10 is a schematic diagram of a second noise identification curve corresponding to a pixel unit of region A provided by an embodiment of the present application;
FIG. 11 is a schematic diagram of a noise signal curve provided by an embodiment of the present application;
FIG. 12 is a schematic diagram of a denoising device for a LIDAR provided by an embodiment of the present application;
FIG. 13 is a schematic diagram of a hardware structure for a LIDAR provided by an embodiment of the present application.

### DETAILED DESCRIPTION OF EMBODIMENTS

The application is described in detail below in conjunction with specific embodiments. The following examples will help those skilled in the art to further understand the application, but do not limit the application in any form. It should be noted that for those skilled in the art, several modifications and improvements can be made without departing from the concept of the application. These are within the scope of the application.

In order to make the objectives, technical schemes and advantages of the application clearer and more understandable, the application is further described in detail below in conjunction with the drawings and examples. It should be understood that the specific examples described herein are only used to explain the application and not to limit the application.

It should be noted that the various features of the embodiments of the present application can be combined with each other if there is no conflict, and are within the protection scope of the present application. In addition, although the functional modules are divided in the device schematic diagram, and the logical order is shown in the flow chart, in some cases, the steps shown or described can be performed in a manner different from the module division in the device or the order in the flow chart. In addition, the words "first", "second", "third" and the like used herein do not limit the data and execution order, and are only used to distinguish the same items or similar items with basically the same function and effect.

Unless otherwise defined, all technical and scientific terms used herein have the same meaning as commonly understood by one of ordinary skill in the art to which this application belongs. The terminology used in the description of the application herein is for the purpose of describing particular embodiments only and is not intended to be limiting of the application. As used herein, the term "and/or" includes any and all combinations of one or more of the associated listed items.

In addition, the technical features involved in the various embodiments of the application described below can be combined with each other as long as they do not conflict with each other.

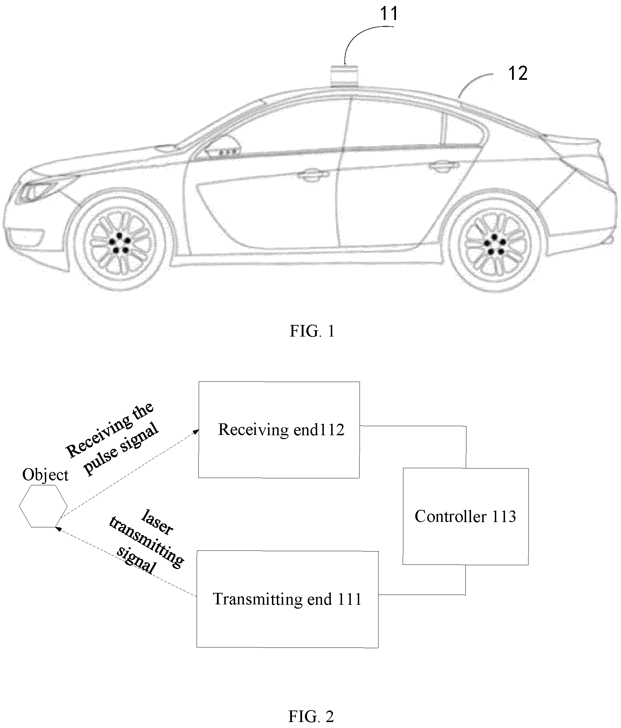

Referring to FIG. 1, FIG. 1 is a schematic diagram of an application environment of a denoising method for a LIDAR provided by an embodiment of the present application. As shown in FIG. 1, the application scenario includes a LIDAR 11 and a vehicle 12. The LIDAR 11 is installed on various vehicles 12 that need to detect the surrounding environment, and the vehicle 12 can be, for example, a car, a ship, an aircraft, etc.

Optionally, the LIDAR 11 can be installed on the front, rear, top, side or any other position of the vehicle body where the LIDAR 11 can be fixed. It can be understood that the LIDAR 11 can also be fixed on other device structure platforms connected with the vehicle. It can be understood that the device structure platform connected with the vehicle can keep synchronous operation with the vehicle during the operation of the vehicle.

The LIDAR 11 can include radars with different functions, and the radars with different functions are installed at different positions of the vehicle. For example, a main LIDAR is generally arranged on the front or top of the vehicle, and can measure a longer distance and have better point cloud quality, and a blind area covering LIDAR is arranged on the side of the vehicle, and is used for covering the blind area of the main LIDAR with a long distance. However, the point cloud from the blind-area covering LIDAR is sparse.

In the embodiment of the present application, the LIDAR 11 is used for emitting a laser beam, the laser beam forms diffuse reflection after reaching the surface of a detection area, generates an echo signal, and the LIDAR 11 receives the echo signal to realize functions such as distance measurement of the detection area.

In some embodiments, the LIDAR includes but is not limited to a pulsed LIDAR and a continuous wave LIDAR.

It should be noted that the vehicle 12 can also be any device for carrying the LIDAR 11, such as a drone, a robot or a sweeper, etc., and the vehicle 12 is only taken as an example in FIG. 1.

In some embodiments, referring to FIG. 2, FIG. 2 is a structural schematic diagram of a LIDAR provided by an embodiment of the present application. The LIDAR 11 includes a transmitting end 111, a receiving end 112 and a controller 113. The transmitting end 111 is a device for emitting laser, and can be, for example, a gas laser, a solid-state laser, a semiconductor laser or a free electron laser, etc. The receiving end is a device for receiving laser, and can be, for example, a charge coupled device (CCD).

In some embodiments, the LIDAR 11 further includes a rotating mechanism, which is a LIDAR mounting skeleton and is used for direction adjustment. In some embodiments, the rotating mechanism can include a rotating base driven to rotate by a belt. The transmitting end 111, the receiving end 112 and the controller 113 are arranged on the rotating mechanism, and the rotating mechanism rotates at a stable rotating speed, so that the LIDAR 11 can scan the surrounding environment and generate real-time point cloud information.

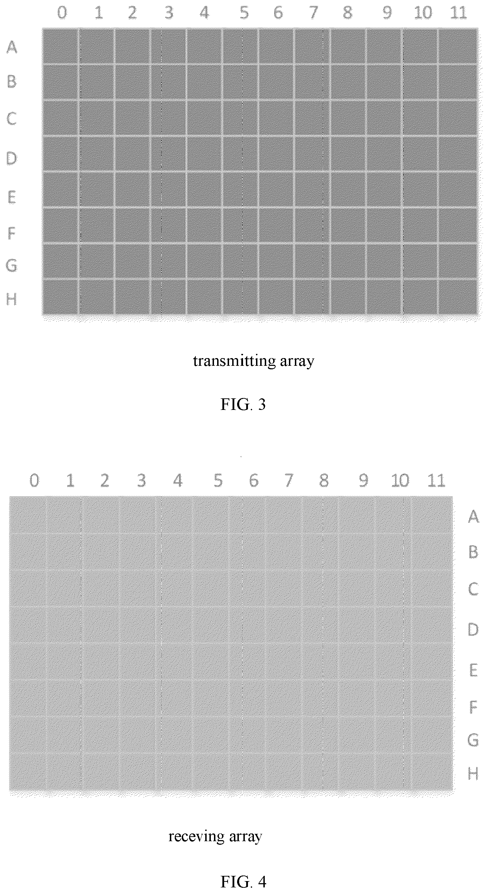

Specifically, the transmitting end 111 includes a transmitting array as shown in FIG. 3, which includes a plurality of transmitting units, which can be any form of laser known in the art, such as a distributed feedback laser or a vertical cavity surface emitting laser, etc. In one or more embodiments, the controller 113 sends a pulse signal to the laser according to a preset time sequence, and the laser emits a laser signal, which is a laser pulse, to the object to be measured after receiving the pulse signal.

The receiving end 112 includes a photoelectric detection sensor for converting the echo signal into a pulse electrical signal, such as a CCD light sensor, a CMOS sensor, a PD photodiode, an APD avalanche diode, a SPAD (single-photon avalanche diode), etc. In one or more embodiments, a SPAD chip is used as the photoelectric detection sensor. The SPAD chip is a digital chip, as shown in FIG. 4, which has a receiving array composed of a plurality of pixels, each of which is in an avalanche state (in some special scenarios, the amplification factor is not the maximum state, and can also be a Geiger mode of linear amplification state) under an applied high voltage difference. In the avalanche state, the pixel unit is excited to discharge when receiving a photon signal of the echo signal or external ambient light, and outputs a value of "1", and is not excited and does not output any value or outputs a value of "0" if no echo signal or external ambient light is received.

The receiving end 112 also includes a signal processing module (not shown in the figure) for amplifying the pulse electrical signal, converting the amplified pulse electrical signal from current to voltage echo signal, and performing signal sampling on the voltage echo signal according to a sampling threshold to achieve detection and obtain a receiving moment of the echo signal. Finally, the controller 113 calculates a laser flight time according to the receiving moment, i.e., a time used for transmitting the laser to receiving the echo signal, and obtains distance information of the measured object from the laser flight time.

The controller 113 is mainly responsible for controlling the transmitting end 111 to transmit the laser, and processing the laser signal received by the receiving end 112 to achieve the function of obtaining the target measurement distance of the target object.

It can be understood that the controller 113 can be an integrated circuit chip with a signal processing capability, and the controller 113 can be a general-purpose processor, a digital signal processor (DSP), an application specific integrated circuit (ASIC), a field programmable gate array (FPGA), a single chip microcomputer, an ARM (Acorn RISC Machine), or other programmable logic devices, discrete gates or transistor logic, discrete hardware components, or any combination of these components. The controller 113 can also be any conventional processor, controller, microcontroller, or state machine. The controller 113 can also be implemented as a combination of computing devices, such as a combination of a DSP and a microprocessor, a plurality of microprocessors, one or more microprocessors in conjunction with a DSP core and/or any other such configuration, or a combination of one or more of a microcontroller unit (MCU), a field programmable gate array (FPGA), and a system on chip (SoC).

It can be understood that the controller 113 in the embodiment of the application further includes a storage module, and the storage module includes but is not limited to one or more of devices such as a flash memory, a NAND flash memory, a vertical NAND flash memory (VNAND), a NOR flash memory, a resistive random access memory (RRAM), a magneto resistive random access memory (MRAM), a ferroelectric random access memory (FRAM), and a spin transfer torque random access memory (STT-RAM).

When the LIDAR works, not only echo signals from a detection region are received, but also noise echo signals generated from ambient light or other LIDARs are received. Therefore, the received echo signals need to be denoised to extract the echo signals of effective target objects, so as to improve the ranging accuracy of the LIDAR.

However, the actual light output efficiency of each transmitting unit can be different, the actual detection efficiency of each receiving unit can also be different, and different regions of the LIDAR irradiate different scenes, so that different regions of the receiving array correspond to different noise types, and the energy of the received echo signals in different regions is also different. If a fixed noise point threshold is used to remove the noise signal in the echo signal, the noise cannot be accurately removed, the denoising effect is poor, and the accuracy of LIDAR ranging is affected.

To solve the above problem, the embodiment of the application provides a denoising method for a LIDAR. The method first acquires echo signals corresponding to pixel units in a receiving array of the LIDAR, obtains a target measurement distance and echo feature information based on the echo signals, wherein the target measurement distance represents a distance corresponding to the echo signals, and the echo feature information is an echo amplitude or an echo width, then obtains a target noise point threshold based on a pixel position of the pixel unit and the target measurement distance, and finally determines whether the echo signal is a noise signal according to the echo feature information and the target noise point threshold, and deletes the echo signal if it is a noise signal. Since different regions of the receiving array correspond to different noise types, and the energy of the received echo signals in different regions is also different, the denoising method obtains the target noise point threshold based on the pixel position of the pixel unit and the target measurement distance corresponding to the echo signal, different pixel positions or different target measurement distances correspond to different target noise point thresholds, and the target noise point threshold changes with the change of the pixel position or the target measurement distance, so that the noise signal in the plurality of echo signals received by the pixel position can be effectively removed, and the accuracy of the LIDAR is improved.

As can be understood from the above, the denoising method of the LIDAR provided by the embodiment of the application can be implemented by the controller 113 or the processor or other devices with computing and processing capabilities, such as electronic devices. The computer program can be integrated in an application or run as a stand-alone tool application.

It should be noted that the electronic device can be hardware or software if the method for denoising the LIDAR provided by the embodiment of the application is executed by the electronic device. When the electronic device is hardware, the electronic device can be implemented as a distributed cluster composed of a plurality of servers or terminal devices, or can be implemented as a single server or a single terminal device. When the electronic device is software, the electronic device can be installed in the hardware devices listed above. The electronic device can be implemented as a plurality of software or software modules for providing distributed services, or can be implemented as a single software or software module. No specific limitation is made herein. It should be understood that the number of electronic devices is merely illustrative, and any number of electronic devices can be used according to the implementation requirements.

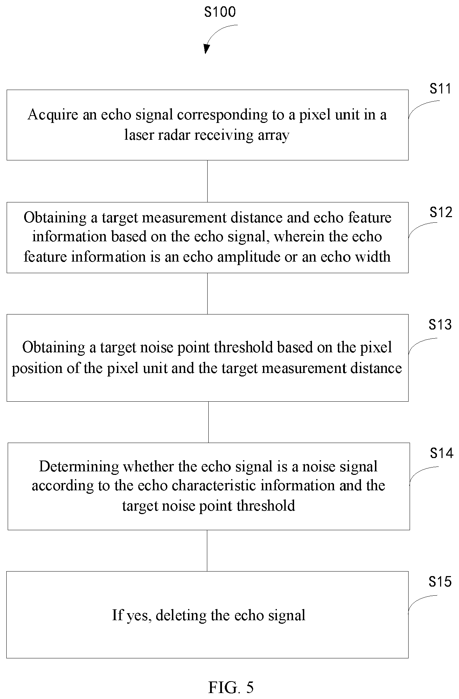

Referring to FIG. 5, FIG. 5 is a flow diagram of the method for denoising the LIDAR provided by the embodiment of the application. As shown in FIG. 5, the method S100 can specifically include the following steps:
S11: acquire an echo signal corresponding to a pixel unit in a LIDAR receiving array;
**[0047]** Before acquiring the echo signal corresponding to the pixel unit, the LIDAR receiving array can be partitioned or grouped. The LIDAR receiving array is partitioned, for example, into a first region and a second region, or into a plurality of regions, and the specific number of partitions is not limited herein. If the LIDAR receiving array is partitioned into the first region and the second region, the noise judgment conditions or the noise thresholds corresponding to the first region and the second region are different, different regions correspond to different noise judgment conditions or noise thresholds, the denoising can be more accurate, and if the first region is denoised, the denoising strategy can be directly performed on each pixel unit in the first region, and the pixel units in the second region are no longer detected, thereby improving the denoising efficiency.

Within the same region, the LIDAR receiving array can be further grouped, for example, into a first group and a second group, or into a plurality of groups, and the specific number of groups is not limited herein. Meanwhile, the number of pixel units included in each group can be the same or different, and the number of pixel units included in each group can be determined according to the detection field of view of the LIDAR.

Specifically, grouping is performed on different detection fields of view to improve the accuracy of noise filtering as much as possible under the condition of saving computing resources, thereby improving the detection accuracy. For example, in order to improve the detection accuracy of the central detection field of view, the pixel units corresponding to the central detection field of view can be grouped as much as possible, and each group can include only one pixel unit. Each group corresponds to the same noise judgment condition or noise threshold, and the fewer pixel units included in each group, the more accurate the noise judgment condition or noise threshold corresponding to the group. Therefore, the judgment of the noise signal is more accurate, and the detection accuracy of the central detection field of view is improved.

In order to save the computing resources, the edge detection field can be grouped less, and each group can include a plurality of pixel units, for example, the pixel units corresponding to the edge detection field, each group including four or five pixel units, and each group corresponding to the same noise judgment condition or noise threshold to filter the noise of the four or five pixel units in the group, so that the noise filtering is realized and the computing resources are saved.

Specifically, the receiving array of the LIDAR is partitioned to obtain a target detection region and an edge detection region, wherein the target detection region is a region to be denoised this time, and the edge detection region is a region at the edge of the receiving array. The target detection region can be determined according to whether there is an echo signal, and the target detection region can also be determined according to a field of view angle.

Specifically, the target detection region is determined according to whether there is an echo signal, for example, a region in which the number of obtained echo signals is greater than a preset threshold is determined as the target detection region, wherein the preset threshold can be set according to actual needs.

The target detection region can also be determined according to a field of view angle, for example, if the field of view angle corresponding to a vertical detection field of a detection field of the LIDAR is -30 degrees to 30 degrees, the central region of the vertical detection field can be defined as a target detection field, for example, -15 degrees to 15 degrees, and the region of the receiving array corresponding to the target detection field is the target detection region. For another example, if the field of view angle corresponding to a horizontal detection field of the LIDAR is -60 degrees to 60 degrees, the central region of the horizontal detection field can be defined as a target detection field, for example, -30 degrees to 30 degrees, and the region corresponding to the target detection field is the target detection region. Alternatively, the detection field corresponding to the central region of the horizontal detection field and the central region of the vertical detection field is defined as the target detection field of the LIDAR, and the region of the receiving array corresponding to the target detection field is the target detection region.

The number of pixel units included in the target detection region and the edge detection region can be the same or different. The target detection region and the edge detection region are grouped respectively, wherein the number of groups included in the target detection region is different from the number of groups included in the edge detection region, for example, the target detection region is divided into four groups, and the edge detection region is divided into two groups. The target detection region can be grouped more to improve the detection precision, and the edge detection region can be grouped less to save the computing resources on the basis of removing the noise.

The number of pixel units included in each group is different. For example, the target detection region is divided into two groups, the number of pixel units included in the first group is five, and the number of pixel units included in the second group is six. The number of pixel units included in each group can be less, and even only one pixel unit, and the more the grouping is fine, the higher the detection precision is.

It should be noted that the number of groups and the number of pixel units included in each group are only illustrative, and grouping can be performed according to actual needs in other embodiments.

When the denoising process is performed, each pixel unit can be denoised one by one. In each detection cycle, the pixel unit can receive at least one echo signal, such as an echo signal reflected by a target object, an echo signal reflected by ambient light, or an echo signal emitted by another LIDAR.

S12: obtaining a target measurement distance and echo feature information based on the echo signal, wherein the echo feature information is an echo amplitude or an echo width;
Different echo signals correspond to different target measurement distances and echo feature information. When laser is emitted to a certain reflecting object, the reflecting object reflects the laser to obtain a corresponding echo signal. The target measurement distance can be obtained based on the echo signal, and the target measurement distance represents a measurement distance between the reflecting object and the LIDAR. The target measurement distance can be directly represented by distance information or by TOF time, which is not limited herein.

The echo feature information can also be obtained based on the echo signal, wherein the echo feature information represents echo energy of the echo signal, and the magnitude of the echo feature information represents the strength of the echo energy. The echo feature information includes an echo amplitude or an echo width. The greater the echo amplitude or the echo width, the stronger the echo energy. The echo amplitude is a peak value of the echo signal, and the echo width can be a full width, a half width, or a 1/4 width of the echo signal.

S13: obtaining a target noise point threshold based on the pixel position of the pixel unit and the target measurement distance;
The noise point thresholds corresponding to pixel units in different regions or different groups are different, and the noise point thresholds corresponding to pixel units in the same group are the same. Therefore, the target noise point threshold corresponding to the pixel unit to be denoised needs to be obtained to effectively remove the noise signal.

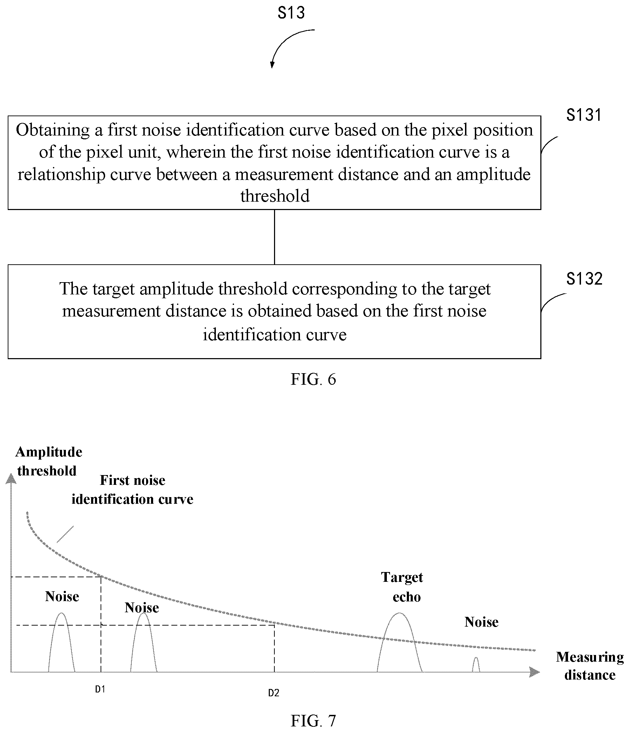

Specifically, the target noise point threshold includes a target amplitude threshold, as shown in FIG. 6, step S13 includes:
S131: obtaining a first noise identification curve based on the pixel position of the pixel unit, wherein the first noise identification curve is a relationship curve between a measurement distance and an amplitude threshold;
The first noise identification curve is designed according to the radar system and can be obtained by calibration. If the first noise identification curve is obtained by calibration, the pixel units (detection units) in different detection fields of view can be calibrated to obtain corresponding amplitude thresholds, and the first noise identification curve at different distances can be obtained. In this way, the amplitude thresholds at preset distances can be calibrated, and the first noise identification curve can be obtained by using an interpolation method. For example, the amplitude thresholds of objects with a preset reflectivity at 100 meters, 120 meters, 150 meters, and 200 meters can be calibrated, and the first noise identification curve at other distances can be obtained by using the interpolation method.

The first noise identification curves of pixel units in different regions are different. For example, the first noise identification curves of the target detection region and the edge detection region are different, but the first noise identification curves of pixel units in the same group are the same.

The target noise point threshold is related to the detection field of view corresponding to the pixel unit. For example, if the upper detection field of view of the LIDAR corresponds to the measurement of the sky, and the lower detection field of view of the LIDAR corresponds to the measurement of the ground, the amplitude threshold corresponding to the far distance can be set to be relatively high for the pixel unit corresponding to the lower detection field of view, so as to filter out the noise signal at the far distance.

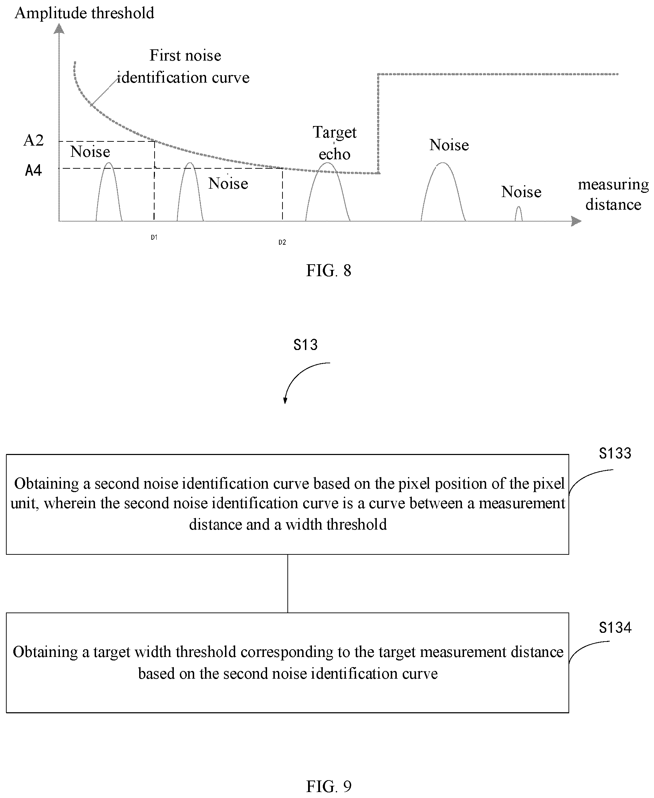

For example, as shown in FIG. 7 and FIG. 8, FIG. 7 is a schematic diagram of the first noise identification curve of the pixel unit in region A, and FIG. 8 is a schematic diagram of the first noise identification curve of the pixel unit in region B. In the diagrams, the horizontal axis is the measurement distance, and the vertical axis is the amplitude threshold. The first noise identification curves in FIG. 7 and FIG. 8 are different. The measurement distance range designed in region A is farther than that in region B, and therefore the amplitude threshold of the far distance in region B is set to be particularly high, for eliminating the data content at the far distance.

In S132, the target amplitude threshold corresponding to the target measurement distance is obtained based on the first noise identification curve.

As shown in FIG. 7 and FIG. 8, if the target measurement distance is D1, the target amplitude threshold corresponding to the first noise identification curve in FIG. 7 is amplitude threshold A1, and the target amplitude threshold corresponding to the first noise identification curve in FIG. 8 is amplitude threshold A2. If the target measurement distance is D2, the target amplitude threshold corresponding to the first noise identification curve in FIG. 7 is amplitude threshold A3, and the target amplitude threshold corresponding to the first noise identification curve in FIG. 8 is amplitude threshold A4.

In the embodiments of the present application, the target noise point threshold is the target amplitude threshold, and the pixel units in different positions can obtain different first noise identification curves. The target amplitude thresholds obtained by using the different first noise identification curves are also different. That is, the position of the pixel unit and the target measurement distance both affect the target noise point threshold.

In some embodiments, the target noise point threshold includes a target width threshold. As shown in FIG. 9, S13 includes:
S133: obtaining a second noise identification curve based on the pixel position of the pixel unit, wherein the second noise identification curve is a curve between a measurement distance and a width threshold.

The second noise identification curve is also designed according to the radar system and can be obtained by calibration. Similarly to the first noise identification curve, if the second noise identification curve is obtained by calibration, the pixel units (detection units) under different detection fields of view can be calibrated to obtain corresponding width thresholds, so as to obtain the second noise identification curves at different distances. Different distances can be selected to calibrate the width thresholds, and then an interpolation method is used to obtain the second noise identification curve.

The pixel units in different regions have different corresponding second noise identification curves, for example, the second noise identification curves corresponding to the target detection region and the edge detection region are different, but the second noise identification curves corresponding to the pixel units in the same group are the same.

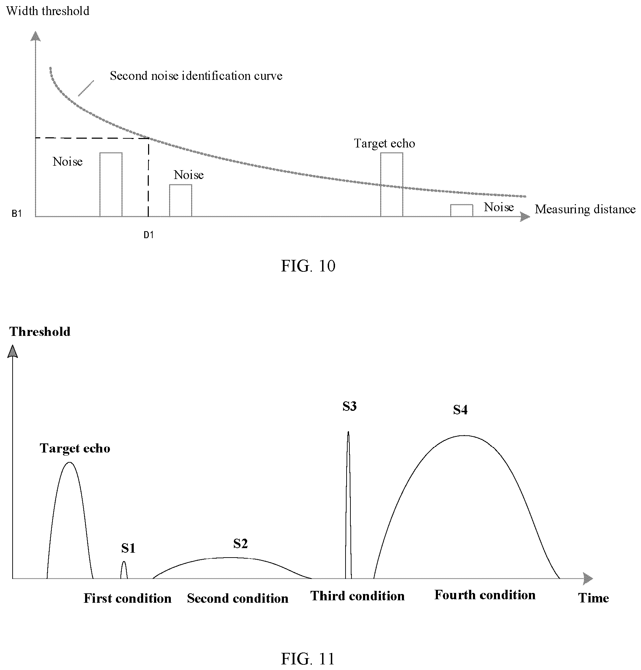

For example, as shown in FIG. 10, FIG. 10 is a schematic diagram of a second noise identification curve of a pixel unit in region A, wherein the horizontal axis of the coordinate system in the diagram is a measurement distance, and the vertical axis is a width threshold.

S134: obtaining a target width threshold corresponding to the target measurement distance based on the second noise identification curve.

As shown in FIG. 10, if the target measurement distance is D1, the target width threshold corresponding to D1 on the second noise identification curve in FIG. 10 is width threshold B1.

In the embodiment of the application, the target noise point threshold is a target width threshold, the pixel units at different positions can obtain different second noise identification curves, and the target width thresholds obtained by using different second noise identification curves are different. That is, the position of the pixel unit and the target measurement distance both affect the target noise point threshold.

It should be noted that the width threshold in the second noise identification curve in the embodiment of the application is a full width threshold, and a half height width threshold or a 1/4 width threshold can also be used. If the half height width threshold is used, the half height width of the echo signal is obtained when the width of the echo signal is obtained in the following embodiments. If the 1/4 width threshold is used, the 1/4 width of the echo signal is obtained when the width of the echo signal is obtained in the following embodiments. If the full width threshold is used, the full width of the echo signal is obtained when the width of the echo signal is obtained in the following embodiments.

In some embodiments, for different detection regions, different noise judgment conditions can be selected, that is, corresponding noise identification curves are selected for noise signal judgment according to the detection regions, for example, for the edge detection field of view, only the first noise identification curve can be selected for noise signal judgment to filter out noise signals, and only the amplitude threshold can be selected for denoising, so that the calculation resources can be saved and the denoising efficiency can be improved. For another example, for the target detection field of view, the first noise identification curve and the second noise identification curve can be combined for noise signal judgment to filter out noise signals, and the amplitude threshold and the width threshold can be combined, so that the denoising precision can be improved, and the detection precision can be improved.

In some embodiments, based on the pixel position of the pixel unit and the target measurement distance, a corresponding threshold combination can be obtained to obtain the corresponding target noise point threshold. Specifically, step S13 further includes: obtaining a first threshold combination, a second threshold combination, a third threshold combination and a fourth threshold combination corresponding to the pixel position of the pixel unit and the target measurement distance, wherein the first threshold combination includes a first amplitude threshold and a first width threshold, the second threshold combination includes a second amplitude threshold and a second width threshold, the third threshold combination includes a third amplitude threshold and a third width threshold, the fourth threshold combination includes a fourth amplitude threshold and a fourth width threshold, and the first threshold combination, the second threshold combination, the third threshold combination and the fourth threshold combination constitute the target noise point threshold.

For example, if the target measurement distance and the position of the pixel unit are obtained, the corresponding first amplitude threshold A1 and the first width threshold B1, the second amplitude threshold A2 and the second width threshold B2, the third amplitude threshold A3 and the third width threshold B3, and the fourth amplitude threshold A4 and the fourth width threshold B4 can be obtained, and the four sets of threshold combinations constitute the target noise point threshold.

The pixel units in different regions have different parameter combinations, for example, the first amplitude threshold A1 and the first width threshold B1 used in the region x are different from the first amplitude threshold A1 and the first width threshold B1 used in the region y.

S14: determining whether the echo signal is a noise signal according to the echo characteristic information and the target noise point threshold;
S15: if so, deleting the echo signal.

The echo characteristic information is characteristic information representing the characteristics of the echo signal, for example, the waveform of the echo signal, the intensity of the echo signal, the echo amplitude or the echo width of the echo signal, etc.

In some embodiments, the echo characteristic information is the echo amplitude, the target noise point threshold is a target amplitude threshold, and if the echo amplitude is less than the target amplitude threshold, the echo signal is determined to be the noise signal.

Referring to Fig. 7, if the target amplitude threshold is A1, and if the echo amplitude of an echo signal is A3, then the echo signal is a noise signal if A3 < A1, and is deleted. If the echo amplitude of an echo signal is A4, then the echo signal is not a noise signal if A4 > A1, and is an effective echo signal.

Similarly, referring to FIG. 8, if the target amplitude threshold is A2, and the echo amplitude of the echo signal is A5, wherein A5<A2, then the echo signal is a noise signal and is deleted. If the echo amplitude of the echo signal is A6, wherein A6>A2, then the echo signal is not a noise signal and is a valid echo signal.

In some embodiments, the echo characteristic information is the echo width, the target noise point threshold is a target width threshold, and if the echo width is less than the target width threshold, the echo signal is determined to be the noise signal.

Referring to FIG. 10, if the target width threshold is B1, if the echo width of the echo signal is B2, wherein B2 < B1, the echo signal is the noise signal and will be deleted. If the echo width of the echo signal is B3, wherein B3 > B1, the echo signal is not the noise signal and is a valid echo signal.

In some embodiments, the echo characteristic information is the echo amplitude and the echo width, and each threshold combination can be used to determine whether the echo signal is the noise signal. Specifically, it is determined whether the echo characteristic information and the target noise point threshold satisfy a preset condition, and if yes, the echo signal is determined to be the noise signal, where the preset condition is that the echo amplitude is less than the first amplitude threshold and the echo width is less than the first width threshold, or the echo amplitude is less than the second amplitude threshold and the echo width is greater than the second width threshold, or the echo amplitude is greater than the third amplitude threshold and the echo width is less than the third width threshold, or the echo amplitude is greater than the fourth amplitude threshold and the echo width is greater than the fourth width threshold.

For example, the threshold combinations are the first amplitude threshold A1 and the first width threshold B1, the second amplitude threshold A2 and the second width threshold B2, the third amplitude threshold A3 and the third width threshold B3, and the fourth amplitude threshold A4 and the fourth width threshold B4. If the echo amplitude and the echo width satisfy the first condition, that is, the echo amplitude < the first amplitude threshold A1 and the echo width < the first width threshold B1, the echo signal is characterized as a very small signal, and the echo signal is determined as a noise signal, such as the echo signal S1 in FIG. 11. If the echo amplitude and the echo width satisfy the second condition, that is, the echo amplitude < the second amplitude threshold A2 and the echo width > the second width threshold B2, the echo signal is characterized as a very wide signal, and the echo signal is determined as a noise signal, such as the echo signal S2 in FIG. 11. If the echo amplitude and the echo width satisfy the third condition, that is, the echo amplitude > the third amplitude threshold A3 and the echo width < the third width threshold B3, the echo signal is characterized as a very sharp signal, and the echo signal is determined as a noise signal, such as the echo signal S3 in FIG. 11. If the echo amplitude and the echo width satisfy the fourth condition, that is, the echo amplitude > the fourth amplitude threshold A4 and the echo width > the fourth width threshold B4, the echo signal is characterized as a very wide and very large signal, and the echo signal is determined as a noise signal, such as the echo signal S4 in FIG. 11.

In general, if there is interference of an echo signal reflected by ambient light or shrubs at a short distance, only the first condition and the second condition can be used for judgment. If there is interference of light emitted by other LIDARs at a relatively long distance, the first condition, the second condition, and the third condition can be used for judgment. If there is interference of multiple radars, the first condition, the second condition, the third condition, and the fourth condition can be used for judgment.

In summary, the denoising method obtains the target noise point threshold based on the pixel position of the pixel unit and the target measurement distance corresponding to the echo signal. Different pixel positions or different target measurement distances correspond to different target noise point thresholds. The target noise point threshold changes with the change of the pixel position or the target measurement distance, so as to effectively remove the noise signal in the plurality of echo signals received by the pixel position and improve the accuracy of the LIDAR.

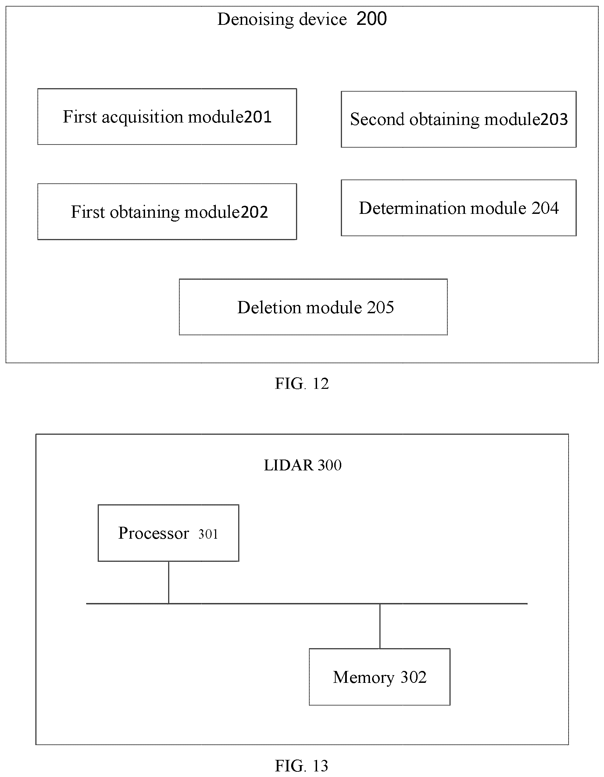

Referring to FIG. 12, FIG. 12 is a structural schematic diagram of a denoising device of a LIDAR provided by an embodiment of the present application. As shown in FIG. 12, the denoising device 200 of the LIDAR comprises a first acquisition module 201, a first obtaining module 202, a second obtaining module 203, a determination module 204, and a deletion module 205.

The first acquisition module 201 is configured to acquire an echo signal corresponding to a pixel unit in a LIDAR receiving array, the first obtaining module 202 is configured to obtain a target measurement distance and echo characteristic information based on the echo signal, the echo characteristic information is an echo amplitude and/or an echo width, the second obtaining module 203 is configured to obtain a target noise point threshold based on a pixel position of the pixel unit and the target measurement distance, the determination module 204 is configured to determine whether the echo signal is a noise signal according to the echo characteristic information and the target noise point threshold, and the deletion module 205 is configured to delete the echo signal.

In the embodiment of the application, the denoising device of the LIDAR can also be built by hardware devices. For example, the denoising device of the LIDAR can be built by one or more chips. The chips can work in coordination with each other to complete the denoising method of the LIDAR described in the above embodiments. For another example, the denoising device of the LIDAR can also be built by various logic devices, such as a general controller, a digital signal processing (DSP), an application specific integrated circuit (ASIC), a field programmable gate array (FPGA), a single chip microcomputer, an ARM (Acorn RISC Machine), or other programmable logic devices, discrete gates or transistor logic, discrete hardware components, or any combination of these components.

The denoising device of the LIDAR provided in the embodiment of the application can implement each process that can be implemented by the denoising method of the LIDAR. To avoid repetition, details are not described herein.

It should be noted that the denoising device of the LIDAR can execute the denoising method of the LIDAR provided in the embodiment of the application, and has the corresponding function modules and beneficial effects of the execution method. Technical details that are not described in detail in the denoising device embodiment of the LIDAR can be referred to the denoising method of the LIDAR provided in the embodiment of the application.

In conclusion, the denoising device of the LIDAR obtains the target noise point threshold based on the pixel position of the pixel unit and the target measurement distance corresponding to the echo signal. Different pixel positions or different target measurement distances correspond to different target noise point thresholds. The target noise point threshold changes with the change of the pixel position or the target measurement distance, so that the noise signal in the plurality of echo signals received by the pixel position can be effectively removed, and the accuracy of the LIDAR is improved.

The embodiment of the application further provides a LIDAR. Referring to FIG. 13, FIG. 13 is a schematic diagram of a hardware structure of a LIDAR provided in the embodiment of the application.

As shown in FIG. 13, the LIDAR 300 includes at least one processor 301, a memory 302 (in FIG. 13, one processor is taken as an example and connected by a bus), and the like which are communicatively connected.

The processor 301 is configured to provide calculation and control capabilities to control the LIDAR 300 to perform corresponding tasks, for example, to control the LIDAR 300 to perform the denoising method of the LIDAR in any of the method embodiments, the method comprising: obtaining an echo signal corresponding to a pixel unit in a receiving array of the LIDAR; obtaining a target measurement distance and echo feature information based on the echo signal, wherein the target measurement distance represents a target measurement distance corresponding to the echo signal, and the echo feature information is an echo amplitude or an echo width; obtaining a target noise point threshold based on a pixel position of the pixel unit and the target measurement distance; and determining whether the echo signal is a noise signal according to the echo feature information and the target noise point threshold, and deleting the echo signal if the echo signal is the noise signal.

In this embodiment, the LIDAR can obtain the target noise point threshold based on the pixel position of the pixel unit and the target measurement distance corresponding to the echo signal, different pixel positions or different target measurement distances correspond to different target noise point thresholds, and the target noise point threshold changes with the change of the pixel position or the target measurement distance, so that the noise signal in the plurality of echo signals received by the pixel position can be effectively removed, and the accuracy of the LIDAR is improved.

The processor 301 can be a general-purpose processor, and can include a Central Processing Unit (CPU), a Network Processor (NP), a hardware chip, or any combination thereof. The processor 301 can also be a Digital Signal Processor (DSP), an Application Specific Integrated Circuit (ASIC), a programmable logic device (PLD), or a combination thereof. The PLD can be a complex programmable logic device (CPLD), a field-programmable gate array (FPGA), a generic array logic (GAL), or any combination thereof.

The memory 302 is a non-transitory computer-readable storage medium, and can be used to store a non-transitory software program, a non-transitory computer-executable program, and a module, such as program instructions/modules corresponding to the denoising method of the LIDAR in the embodiments of the present application. The processor 301 can implement the denoising method of the LIDAR in any of the method embodiments by running the non-transitory software program, instructions, and modules stored in the memory 302, and details are not described herein to avoid repetition.

Specifically, the memory 302 can include volatile memory (VM), such as random access memory (RAM); the memory 302 can also include non-volatile memory (NVM), such as read-only memory (ROM), flash memory, a hard disk drive (HDD), or a solid-state drive (SSD) or other non-transitory solid-state storage device; and the memory 302 can further include a combination of the above types of memory.

In embodiments of the application, the memory 302 can also include remotely located storage that is connected to the processor via a network. Examples of such networks include, but are not limited to, the Internet, intranets, local area networks, mobile communication networks, and combinations of these.

In embodiments of the application, the LIDAR 300 can further include other components for implementing device functions, which are not described herein.

The embodiments of the application further provide a computer-readable storage medium, for example, a memory including program code executable by a processor to perform the method of denoising the LIDAR in the above embodiments. For example, the computer-readable storage medium can be a Read-Only Memory (ROM), a Random Access Memory (RAM), a Compact Disc Read-Only Memory (CDROM), a magnetic tape, a floppy disk, an optical data storage device, and the like.

The embodiments of the application further provide a computer program product including one or more program codes stored in a computer-readable storage medium. A processor of an electronic device reads the program codes from the computer-readable storage medium, and executes the program codes to perform the method steps of the method of denoising the LIDAR provided in the above embodiments.

It should be noted that the apparatus embodiments described above are only schematic, and units described as separate components can or can not be physically separate, and the components displayed as units can or can not be physical units, i.e., can be located in one place, or can be distributed on a plurality of network units. Part or all of the modules can be selected according to actual requirements to achieve the purpose of the embodiments.

A person of ordinary skill in the art can understand that all or part of the processes in the foregoing method embodiments can be completed by using a computer program to instruct related hardware. The program can be stored in a computer-readable storage medium. When the program is executed, the program can include the processes of the foregoing method embodiments. The storage medium can be a disk, a compact disc, a read-only memory (ROM), a random access memory (RAM), or the like.

It should be noted that the above embodiments are only used for describing the technical solutions of the present application, rather than limiting them. Under the idea of the present application, the technical features in the above embodiments or different embodiments can be combined, the steps can be implemented in any order, and there are many other variations of different aspects of the present application as described above, which are not provided in details for simplicity. Although the present application is described in detail with reference to the foregoing embodiments, those of ordinary skill in the art should understand that the technical solutions recorded in the foregoing embodiments can be modified, or some technical features can be replaced by equivalents. These modifications or replacements do not make the essence of the corresponding technical solutions deviate from the scope of the technical solutions of the embodiments of the present application.

## Claims

1. A denoising method for a LIDAR, comprising:
obtaining an echo signal corresponding to a pixel unit in a receiving array of the LIDAR;
obtaining a target measurement distance and echo feature information based on the echo signal, wherein the echo feature information is an echo amplitude or an echo width;
obtaining a target noise point threshold based on a pixel position of the pixel unit and the target measurement distance;
determining whether the echo signal is a noise signal according to the echo feature information and the target noise point threshold; and
if so, deleting the echo signal.

2. The method of claim 1, wherein the target noise point threshold comprises a target amplitude threshold, and the obtaining the target noise point threshold based on the pixel position of the pixel unit and the target measurement distance comprises:
obtaining a first noise identification curve based on the pixel position of the pixel unit, wherein the first noise identification curve represents a relationship between a measurement distance and an amplitude threshold; and
obtaining the target amplitude threshold corresponding to the target measurement distance based on the first noise identification curve.

3. The method of claim 2, wherein the echo feature information is the echo amplitude, and the determining whether the echo signal is a noise signal according to the echo feature information and the target noise point threshold comprises:
if the echo amplitude is less than the target amplitude threshold, determining that the echo signal is a noise signal.

4. The method of claim 1, wherein the target noise point threshold comprises a target width threshold, and the obtaining the target noise point threshold based on the pixel position of the pixel unit and the target measurement distance comprises:
obtaining a second noise identification curve based on the pixel position of the pixel unit, wherein the second noise identification curve represents a relationship between a measurement distance and a width threshold; and
obtaining the target width threshold corresponding to the target measurement distance based on the second noise identification curve.

5. The method of claim 4, wherein the echo feature information is the echo width, and the determining whether the echo signal is a noise signal according to the echo feature information and the target noise point threshold comprises:
if the echo width is less than the target width threshold, determining that the echo signal is a noise signal.

6. The method of claim 1, wherein the obtaining the target noise point threshold based on the pixel position of the pixel unit and the target measurement distance comprises:
obtaining a first threshold combination, a second threshold combination, a third threshold combination, and a fourth threshold combination corresponding to the pixel position of the pixel unit and the target measurement distance,
the first threshold combination comprises a first amplitude threshold and a first width threshold, the second threshold combination comprises a second amplitude threshold and a second width threshold, the third threshold combination comprises a third amplitude threshold and a third width threshold, the fourth threshold combination comprises a fourth amplitude threshold and a fourth width threshold, and the first threshold combination, the second threshold combination, the third threshold combination, and the fourth threshold combination constitute the target noise point threshold.

7. The method of claim 6, wherein the echo feature information comprises the echo amplitude and the echo width, and the determining whether the echo signal is a noise signal according to the echo feature information and the target noise point threshold comprises:
determining whether the echo feature information and the target noise point threshold satisfy a preset condition; and
if so, determining that the echo signal is a noise signal,
wherein the preset condition is that:
the echo amplitude is less than the first amplitude threshold and the echo width is less than the first width threshold; or
the echo amplitude is less than the second amplitude threshold and the echo width is greater than the second width threshold; or
the echo amplitude is greater than the third amplitude threshold and the echo width is less than the third width threshold; or
the echo amplitude is greater than the fourth amplitude threshold and the echo width is greater than the fourth width threshold.

8. The method of any one of claims 1 to 7, wherein before acquiring the echo signal corresponding to the pixel unit in the receiving array of the LIDAR, the method further comprises:
partitioning the receiving array of the LIDAR to obtain a target detection region and an edge detection region; and
grouping the pixel units in the target detection region and the edge detection region respectively, wherein the target detection region contains a different number of groups from the edge detection region, and each group contains a different number of pixel units.

9. The method of claim 8, wherein the pixel units in a same group share the same noise identification curve.

10. A LIDAR, comprising:
at least one processor; and
a memory connected with the at least one processor, wherein the memory stores instructions executable by the at least one processor, and the instructions are executable by the at least one processor to cause the at least one processor to perform the denoising method for the LIDAR of any one of claims 1 to 9.
